# EUROPÄISCHE PATENTSCHRIFT

(11) **EP 2 545 784 B1**
(45) Veröffentlichungstag und Bekanntmachung des Hinweises auf die Patenterteilung: **13.11.2013**
(21) Anmeldenummer: 12171405.9
(22) Anmeldetag: 08.06.2012
(51) Int. Cl.: A23G 3/02, A23G 3/04

(54) **Vorrichtung und Verfahren zur Herstellung einer Süßwarenmasse**
Method and device for manufacturing a confectionery mass
Procédé et dispositif destinés à la fabrication dýune masse de confiserie

(30) Priorität: 15.07.2011 DE 102011079286
(43) Veröffentlichungstag der Anmeldung: 16.01.2013
(73) Patentinhaber: Klöckner Hänsel Processing GmbH, 30163 Hannover (DE)
(72) Erfinder: Koch, Bernhard, 30655 Hannover (DE); Kühn, Heiko, 30559 Hannover (DE); Temme, Frank, 30900 Wedemark (DE)
(74) Vertreter: Taruttis, Stefan Georg

(56) Entgegenhaltungen:
- DE-A1- 4 314 210
- DE-B3-102004 006 859
- DE-C1- 10 217 984

## Beschreibung

Die vorliegende Erfindung betrifft eine Vorrichtung und ein Verfahren zur Herstellung einer Süßwarenmasse. Die Vorrichtung ist dazu eingerichtet, dass ein damit durchgeführtes Verfahren aus kristallinem Zucker und/oder kristallinen Zuckeraustauschstoffen, insbesondere kristalliner Sacccharose eine homogene Süßwarengrundmasse mit geringem Gehalt an zusätzlichem Lösungswasser (sogenanntes Rezeptwasser) durch Erwärmen herstellen kann. Diese Süßwarenmasse kann in einem weiteren Verfahrensschritt durch Verdampfen des Rezeptwassers auf einen finalen Trockensubstanzgehalt gebracht werden.

### Stand der Technik

Es ist bekannt, die Hauptinhaltsstoffe einer Zuckerware, nämlich Zucker, Glucosesirup und Wasser in einem solchen Verhältnis in einem ersten Behälter vorzulegen, dass der Zucker vor Erreichen der Siedetemperatur bei Umgebungsdruck vollständig gelöst wird. Es ist weiterhin bekannt, Zucker, Glucosesirup und Wasser unter Überdruck in Lösung zu bringen. Diese Zuckerlösung wird nach einem weiteren Kocher, der bei atmosphärischem Druck, Überdruck oder Vakuum arbeitet, weiter ausgedampft und anschließend auf Umgebungsdruck, optional zusätzlich unter Vakuum, zur Entfernung von Wasser auszudampfen. Das Ausdampfen ist erforderlich, um den gewünschten hohen Trockensubstanzgehalt zu erreichen. Die Differenz des Wassergehalts der eingewogenen anfänglichen Masse zum Wassergehalt der ausgedampften Masse wird als sogenannter Brüden im Anschluss an das Kochen aus der Masse ausgedampft. Vorrichtungen und Verfahren zur Herstellung einer Süßwarenmasse werden beispielsweise in DE 10217984, DE 4314210 und DE 10 2004 006859 beschrieben.

### Aufgabe der Erfindung

Die Aufgabe der Erfindung liegt darin, eine Vorrichtung und ein Verfahren bereitzustellen, mit denen der Anteil Rezeptwasser, der in der anfänglichen ersten Masse zusätzlich zu einem Restwassergehalt des Endprodukts enthalten ist und im Anschluss an das Kochen ausgedampft wird, vermindert wird, insbesondere vermieden wird, vorzugsweise zur Verringerung der thermischen Verluste bzw. des Energieaufwands bei der Herstellung.

### Allgemeine Beschreibung der Erfindung

Die Erfindung löst die Aufgabe mit den Merkmalen der Ansprüche und insbesondere mit einer Vorrichtung, die auch als Druckauflöser bezeichnet werden kann, die zumindest einen ersten beheizbaren Behälter mit einem Rührwerk umfasst, der druckdicht verschließbar ist, beispielsweise bis 10 bar, bevorzugter bis 5 bar, insbesondere 1 bis 3 bar Druck über Umgebungsdruck beaufschlagbar ist. Das Rührwerk des ersten Behälters ist optional ausgelegt, um eine erste Masse hoher Viskosität zu mischen, insbesondere um eine erste Masse mit einem Gehalt an Trockensubstanz von zum Beispiel 85 bis 90 Gew.-%, Rest Wasser bei einer Temperatur von z.B. 40 bis 60 °C zu mischen. Zum Beispiel ist das Rührwerk ein Intensivrührwerk mit an der Behälterwandung angeordneten Strombrechernoder ein Rührwerk mit Gegenräumern, die zum Beispiel in Form eines konzentrischen Rührwerks gegenläufig rotieren und durch Ausnehmungen der Rührelemente treten, die zwischen den Rührelementen des Rührwerks gebildet sind.

Für die Druckfestigkeit des ersten Behälters weist dieser einen druckdicht verschließbaren Deckel und druckdicht verschließbare Zuführungen für die Bestandteile der Süßwarenmasse auf und eine druckdicht verschließbare Abgasleitung.

Für die Beheizung weist der erste Behälter vorzugsweise einen beheizbaren Doppelmantel auf, der insbesondere mit Dampf beheizbar ist.

Der erste Behälter ist daher eingerichtet, eine erste Masse auf eine Temperatur oberhalb ihres Siedepunkts bei Umgebungsdruck zu erwärmen und insbesondere auf eine Zieltemperatur oberhalb der Siedetemperatur bei druckdichtem Verschließen zu erwärmen. Durch Erwärmung auf eine Zieltemperatur oberhalb der Siedetemperatur der Masse bei Umgebungsdruck wird der erste Behälter mit Überdruck beaufschlagt, der durch die Verdampfung erzeugt wird. Die Zieltemperatur entspricht zumindest der Temperatur, die zum vollständigen Lösen der wasserlöslichen Inhaltsstoffe der ersten Masse, insbesondere des Zuckers erforderlich ist.

Der zumindest eine erste Behälter weist eine erste Auslassleitung auf, in der ein erstes Auslassventil angeordnet ist, um im Anschluss an die Erwärmung auf die Zieltemperatur die erste Masse austreten zu lassen. An der ersten Auslassleitung ist ein zweiter Behälter angeschlossen, der ebenfalls druckfest ist und druckdicht verschließbar ist. Der zweite Behälter weist wie der erste Behälter eine Heizeinrichtung auf, vorzugsweise einen mit Dampf beheizbaren Doppelmantel. Der zweite Behälter ist bevorzugt bis 10 bar, vorzugsweise bis 5 bar, insbesondere für 1 bis 3 bar druckfest und verschließbar. Der zweite Behälter weist eine zweite Auslassöffnung auf, die mittels eines zweiten Auslassventils verschließbar ist und vorzugsweise im Bodenbereich des zweiten Behälters mündet. Zum Entleeren des zweiten Behälters weist die zweite Auslassleitung optional eine Austragseinrichtung auf, beispielsweise eine Pumpe. Bevorzugt ist die Vorrichtung eingerichtet, dass das Entleeren des zweiten Behälters allein durch ein Druckgefälle und durch die Schwerkraft getrieben wird. Entsprechend weist die zweite Auslassleitung bevorzugt keine motorische Austragseinrichtung auf. Das zweite Auslassventil ist vorzugsweise in der zweiten Auslassleitung zwischen dem zweiten Behälter und der Austragseinrichtung angeordnet.

Bevorzugt ist der erste Behälter oberhalb des zweiten Behälters angeordnet, so dass beim Verfahren ein Austreten der Masse aus dem ersten Behälter in den zweiten allein durch die Druckdifferenz zwischen erstem und zweitem Behälter und durch die Schwerkraft getrieben wird. Entsprechend weist die erste Auslassleitung bevorzugt keine Pumpe auf.

In bevorzugter Ausführung ist der erste Behälter mit Druck beaufschlagbar, insbesondere mittels eines Druckgases, z.B. Luft, Stickstoff und/oder CO₂ und weist z.B. dazu eine angeschlossene Druckgasquelle auf, aus der das Druckgas zur Druckbeaufschlagung in den ersten Behälter einströmen gelassen werden kann.

Optional weist auch der zweite Behälter eine mittels einer Leitung angeschlossene Druckgasquelle auf und ist mit Druckgas beaufschlagbar. Optional können der erste und der zweite Behälter an derselben Druckgasquelle angeschlossen sein.

In bevorzugter Ausführungsform weist die Vorrichtung eine Brüdenleitung mit einem Brüdenventil auf, die den zweiten Behälter mit dem ersten Behälter verbindet und vorzugsweise im oberen Abschnitt, insbesondere im Deckelbereich des zweiten Behälters mündet. Die Brüdenleitung kann in der unteren Hälfte des ersten Behälters münden, insbesondere im Bodenbereich des ersten Behälters. Bevorzugt ist die Brüdenleitung in einem Abschnitt über die maximale Füllhöhe des ersten Behälters, bevorzugt über die Höhe des Deckels des ersten Behälters geführt, bevor sie in den ersten Behälter mündet. Diese Ausfiihrungsform hat den Vorteil, dass ein Übergang von Bestandteilen, insbesondere von Zuckerkristallen, aus dem ersten Behälter in den zweiten Behälter, z.B. unter Schwerkrafteinfluss, vermieden wird. So kann die Brüdenleitung z.B. einen Bogen aufweisen, dessen Scheitel oberhalb des ersten Behälters angeordnet ist und einen daran anschließenden Abschnitt, der durch die Wandung, bevorzugt durch den Deckel des ersten Behälters geführt ist und die Mündung innerhalb des ersten Behälters aufspannt. Ein Abschnitt der Brüdenleitung, der innerhalb des ersten Behälters angeordnet ist, kann einen Strombrecher bilden oder innerhalb eines Strombrechers im ersten Behälter angeordnet sein. Weiter bevorzugt mündet die Brüdenleitung innerhalb des ersten Behälters unterhalb dessen maximaler Füllhöhe, bevorzugter bei maximal 80%, bei maximal 70%, bei maximal 60%, bei maximal 50%, bei maximal 40%, bei maximal 30%, bei maximal 20% oder bei maximal 10% der Innenhöhe des ersten Behälters. Weiter bevorzugt ist die Brüdenleitung zur Vermeidung einer Kondensation von Brüden thermisch isoliert und/oder beheizbar. So kann die Brüdenleitung insbesondere in dem Abschnitt, in dem sie außerhalb des ersten und des zweiten Behälters verläuft, z.B. eine thermische Isolierung und/oder einen beheizbaren Doppelmantel aufweisen.

Bevorzugt weist die Brüdenleitung das Brüdenventil an ihrer Mündung auf, wobei das Brüdenventil bevorzugt eingerichtet ist, im geschlossenen Zustand die Mündung der Brüdenleitung zu überdecken. In dieser Ausführung ist das Brüdenventil an der Brüdenleitung in der Ebene ihrer Mündung oder unmittelbar angrenzend an die Ebene ihrer Mündung angeordnet. Dies hat den Vorteil, das Eindringen von erster Masse aus dem ersten Behälter in die Brüdenleitung im geöffneten Zustand des Brüdenventils zu vermindern bzw. zu vermeiden. Das Brüdenventil kann ein axial zur Brüdenleitung verschiebliches und/oder zum Querschnitt der Brüdenleitung schwenkbares Element sein, z.B. eine Platte, die in Geschlossenstellung die Mündung überdeckt und in Offenstellung von der Mündung beabstandet und/oder gegen den Querschnitt der Mündung verschwenkt ist.

Optional weist die Brüdenleitung angrenzend an ihre Mündung einen Verteiler auf, z.B. in Form von zueinander beabstandeten Vorsprüngen, die sich über die Mündung erstrecken, z.B. parallel oder in einem Winkel zu der an die Mündung angrenzenden Wand der Brüdenleitung.

Die Vorrichtung weist vorzugsweise eine Dosiereinrichtung auf, mit der die Inhaltsstoffe der ersten Masse rezeptgetreu dosiert und in den ersten Behälter eingefüllt werden können. Die Dosiereinrichtung ist vorzugsweise von einer Steuereinrichtung gesteuert, die Signale von Wiegezellen übermittelt bekommt. Die Wiegezellen der Vorrichtung können so angeordnet sein, dass darauf der erste Behälter oder ein Zwischenwiegebehälter gelagert ist. Die Vorrichtung weist zumindest eine am ersten Behälter angeschlossene, druckdicht verschließbare Zuführleitung zur Zuführung der Inhaltsstoffe auf, insbesondere für Kristallzucker, Zuckeraustauschstoffe, z.B. Zuckeralkohole, beispielsweise Isomalt, einschließlich wasserhaltiger Inhaltsstoffe, z.B. Glucosesirup, Milch und/oder Wasser. Weitere optionale Inhaltsstoffe sind z.B. Fette, Geliermittel, beispielsweise Stärke, Gelatine, Agar-Agar in Pulverform oder als Suspension. Generell bevorzugte feste wasserlösliche Inhaltsstoffe sind Kristallzucker und kristallförmige Zuckeraustauschstoffe, z.B. Zuckeralkohole, beispielsweise Isomalt.

Die Dosiereinrichtung kann an der druckdicht verschließbaren Zuführleitung angeordnete Zwischenwiegebehälter aufweisen, die beispielsweise auf Wiegezellen gelagert sind und durch Fördereinrichtungen mit den Inhaltsstoffen der ersten Masse satzweise gesteuert befüllt werden können und, wie für alle Ausführungsformen bevorzugt, durch ein druckdicht verschließbares Ventil, das in der Zuführleitung angeordnet ist, in den ersten Behälter gefüllt werden.

Optional können die Inhaltsstoffe vor dem Einfüllen in den ersten Behälter vorgemischt werden, z.B. kann ein statischer oder dynamischer Mischer zwischen dem Ventil der Zuführleitung und zumindest zwei Zwischenwiegebehältern angeordnet sein.

Vorzugsweise weist die Vorrichtung eine Steuereinrichtung auf, die eingerichtet ist, den ersten Behälter druckdicht zu verschließen, insbesondere die Ventile in den Leitungen zu verschließen, die am ersten Behälter angeschlossen sind, optional mit dem Schritt des Zuleitens von Druckgas bis zum Erreichen eines Überdrucks in dem ersten Behälter, und Aufheizen des ersten Behälters unter Rühren bis auf eine Zieltemperatur, die oberhalb der Siedetemperatur bei Umgebungsdruck liegt, bis zum vollständigen Lösen der festen Inhaltsstoffe, bzw. bis eine homogene Lösung erreicht ist.

Bevorzugt ist die Steuereinrichtung eingerichtet, nach Erreichen der Zieltemperatur im ersten Behälter, vorzugsweise nach einer Haltezeit bei der Zieltemperatur unter Rühren bis zum vollständigen Lösen fester Inhaltsstoffe, das erste Auslassventil in der ersten Auslassleitung zu öffnen, so dass die erste Masse aus dem ersten Behälter in den zweiten Behälter übertreten kann. Bevorzugt ist die Steuereinrichtung eingerichtet, vor dem Öffnen des ersten Auslassventils den zweiten Behälter mit Druck zu beaufschlagen, insbesondere durch Zuleitung von Druckgas in den zweiten Behälter. Eine solche Druckbeaufschlagung des zweiten Behälters verhindert beim Einleiten der ersten Masse aus dem unter Druck stehenden ersten Behälter in den zweiten Behälter eine schlagartige Entspannung der ersten Masse.

Optional ist die Steuereinrichtung eingerichtet, den ersten Behälter vor, nach oder während des Öffnens des ersten Auslassventils durch Zuleitung von Druckgas mit Druck zu beaufschlagen, beispielsweise auf einen Gesamtdruck, der größer als der Druck im zweiten Behälter ist. Weiterhin ist die Steuereinrichtung eingerichtet, nach Überleiten der ersten Masse aus dem ersten Behälter in den zweiten Behälter das erste Auslassventil zu schließen, den ersten Behälter zu entspannen, beispielsweise durch Öffnen eines Abgasventils in einer an dem ersten Behälter angeschlossenen Abgasleitung, und mittels einer Dosiereinrichtung einen weiteren Satz der ersten Mischung für die Süßwarenmasse in den ersten Behälter zu füllen, und den ersten Behälter erneut druckdicht zu verschließen, um das Aufheizen des ersten Behälters unter Druck und unter Rühren mit Entleeren in den zweiten Behälter in weiteren Zyklen zu steuern.

In besonders bevorzugter Ausführungsform ist die Steuereinrichtung eingerichtet, nach Einleiten der ersten Masse aus dem ersten Behälter in den zweiten Behälter, nach Schließen des ersten Auslassventils und nach Einfüllen eines weiteren Satzes Inhaltsstoffe, der wiederum eine erste Masse bildet, in den ersten Behälter und druckdichtem Verschließen des ersten Behälters ein in einer Brüdenleitung angeordnetes Brüdenventil zu öffnen, so dass Brüden aus der ersten Masse, die im zweiten Behälter ist, durch die Brüdenleitung in den ersten Behälter strömt und den dort enthaltenen weiteren Satz einer ersten Masse kontaktiert. Durch diesen Druckausgleich zwischen dem ersten Behälter und dem zweiten Behälter können die Brüden im ersten Behälter kondensieren und den dort enthaltenen Satz erster Masse erwärmen. Durch das Abscheiden von Brüden aus der ersten Masse, die im zweiten Behälter ist, ist deren Trockensubstanzgehalt erhöht. Nach Übertritt von Brüden aus dem zweiten Behälter in den ersten Behälter wird das Brüdenventil geschlossen. Entsprechend ist die Steuereinrichtung vorzugsweise eingerichtet, nach Übertritt vom Brüden aus dem zweiten Behälter in den ersten Behälter, beispielsweise abhängig von der Temperaturerhöhung des ersten Behälters und/oder abhängig von einer Druckänderung im ersten und/oder zweiten Behälter gesteuert, das Brüdenventil zu schließen. Optional kann das Abgasventil des ersten Behälters vor Öffnung des Brüdenventils geschlossen werden.

In der bevorzugten Ausführungsform erlaubt die Einrichtung des Druckauflösers ein Verfahren, bei dem nach Überleitung der ersten Masse aus dem ersten Behälter unter Druck in den unter Druck stehenden zweiten Behälter, Entspannen des ersten Behälters nach Verschließen des zweiten Behälters durch Schließen des ersten Ablassventils, Einfüllen eines weiteren Satzes Inhaltsstoffe, die eine erste Masse bilden, in den ersten Behälter Brüden, die aus dem zweiten Behälter stammen, in den ersten Behälter rückgeführt werden. Durch dieses Abtrennen von Brüden wird der Wassergehalt der in dem zweiten Behälter enthaltenen Masse verringert, so dass diese anschließend die zweite Masse bildet. Der Druckauflöser ist z.B. eingerichtet, dass zur Herstellung von Hartbonbonmasse mit einem Trockensubstanzgehalt von ca. 97-98% eine erste Masse mit 85-90% Trockensubstanzgehalt in den ersten Behälter eingefüllt wird, wobei mit der bevorzugten Ausführungsform eine zweite Masse erzeugt wird, die wegen der Abtrennung von Brüden einen um zumindest 1 bis 2 %-Punkte höheren Trockensubstanzgehalt aufweist. Da die aus der zweiten Masse abgetrennten Brüden in der bevorzugten Ausführungsform der eingefüllten ersten Masse im ersten Behälter zugeführt werden, erhöhen diese Brüden deren Wassergehalt bzw. erniedrigen deren Trockensubstanzgehalt, wodurch das Auflösen fester Bestandteile der ersten Masse beschleunigt wird. Die Abtrennung von Brüden aus der in den zweiten Behälter überführten Masse führt zur Erhöhung des Trockensubstanzgehalts, so dass zuvor zugeführter kondensierter Brüden im Wesentlichen, insbesondere vollständig, wieder entfernt wird.

In einer einfachen Ausführungsform erlaubt die Einrichtung des ersten Behälters zur Erwärmung der ersten Masse unter Druck und unter Rühren und zur Überleitung der ersten Masse unter Druck in den zweiten Behälter, insbesondere bei Beaufschlagung des ersten Behälters und/oder des zweiten Behälters mit einem Druckgas auf einen Druck oberhalb des Verdampfungsdrucks bei der Zieltemperatur, das vollständige Lösen fester Inhaltsstoffe zur Erzeugung einer ersten homogenen Masse, die einen reduzierten Gehalt an Rezeptwasser aufweist, insbesondere einen Trockensubstanzgehalt von zumindest 90 Gew.-% aufweist. Die Vorrichtung ist dazu eingerichtet, die erste Masse nach dem vollständigen Lösen in einen mit Druck beaufschlagbaren zweiten Behälter überzuleiten, wobei vorzugsweise der erste Behälter eine Druckgasquelle aufweist, die eingerichtet ist, den ersten Behälter vor oder während des Öffnens des ersten Auslassventils zusätzlich mit Druckgas zu beaufschlagen. Dies erlaubt die Herstellung einer Süßwarenmasse, die gegenüber dem Lösen bei Umgebungsdruck einen verringerten Anteil Rezeptwasser aufweist, und insbesondere bevorzugt kein Rezeptwasser enthält, das zusätzlich zu dem Wassergehalt der zweiten Masse oder zusätzlich zu dem Wassergehalt der Süßwarenmasse nach deren Abkühlung enthalten ist, insbesondere zumindest 90 Gew.-% Trockensubstanz, z.B. als Gesamtzuckergehalt. In der bevorzugten Ausführungsform ergibt sich durch die Einrichtung des Druckauflösers zur Einleitung von Brüden aus dem Satz erster Masse, der im zweiten Behälter ist, mittels der Brüdenleitung in den ersten Behälter einerseits eine Verminderung des Wassergehalts bzw. eine Erhöhung der Trockensubstanz des Satzes der ersten Masse, der im zweiten Behälter enthalten ist, andererseits die Rückführung der thermischen Energie, die in dem Brüden enthalten ist, in den Satz erster Masse, der im ersten Behälter enthalten ist. Auf diese Weise wird insgesamt der Energiebedarf für das Erwärmen auf die Zieltemperatur, die zum vollständigen Lösen der festen Inhaltsstoffe in der ersten Masse erforderlich ist, reduziert. Denn die Wärme und die Kondensationswärme des Brüdens werden in den ersten Behälter überführt und führen zu einer Temperaturerhöhung der darin vorgelegten Masse. Da der zweite Behälter während des Rückführens des Brüdens in den ersten Behälter unter Druck steht, ist der Brüden gespannt und weist daher einen erhöhten Energieinhalt auf. Überdies bildet der im ersten Behälter kondensierende Brüden zusätzliches Lösungswasser.

In bevorzugter Ausführungsform ist die Steuereinrichtung der Vorrichtung eingerichtet, wasserhaltige Inhaltsstoffe, die generell insbesondere flüssig sind, insbesondere Glukosesirup ohne oder mit nur einem Anteil nicht wasserhaltiger, insbesondere fester wasserlöslicher Inhaltsstoffe, insbesondere kristallinen Zuckers und/oder Zuckeraustauschstoffs als erste Masse in den ersten Behälter einzufüllen, optional mit zugesetztem Wasser, diese erste Masse unter Einleitung von Brüden aus dem zweiten Behälter zu erwärmen, z.B. auf 70 bis 90°C, insbesondere auf 80°C, und anschließend die nicht wasserhaltigen Inhaltsstoffe, insbesondere kristallinen Zucker und Zuckeraustauschstoffe zuzuführen. Diese Einrichtung der Steuereinrichtung bzw. der Vorrichtung erlaubt eine entsprechende Verfahrensführung, bei der zunächst wasserhaltige Inhaltsstoffe in den ersten Behälter dosiert werden und die anteilig die erste Masse bilden und diese durch Einleiten von Brüden aus dem zweiten Behälter erwärmt und mit kondensiertem Brüden versetzt wird. Die Erwärmung dieser anteiligen ersten Masse und deren durch kondensierten Brüden erniedrigter Trockensubstanzgehalt erniedrigt deren Viskosität, so dass das Rührwerk im ersten Behälter keine erhöhte Leistung aufweisen muss und z.B. einen Propeller- oder Turbinenrührer aufweisen kann. Weiter ist die Steuereinrichtung zur anschließenden Zudosierung der festen wasserlöslichen Inhaltsstoffe, insbesondere von kristallinem Zucker und/oder Zuckeraustauschstoff eingerichtet, so dass diese festen Inhaltsstoffe schnell und unter Rühren in die mit Brüden versetzten wasserhaltigen Inhaltsstoffe gemischt werden. Diese Einrichtung der Steuereinrichtung bzw. die dadurch ausgeführten Verfahrensschritte vermeiden die hohe Viskosität einer ersten Masse, die auch als Slurry bezeichnet wird und durch unmittelbares Dosieren der wasserhaltigen und der festen wasserlöslichen Inhaltsstoffe der ersten Masse in einen ersten Behälter erhalten wird. Die wasserhaltigen Inhaltsstoffe können auch als wässrige Inhaltsstoffe bezeichnet werden, da sie aus einer flüssigen Phase bestehen, wie z.B. Glukosesirup und Wasser.

Diese Ausführungsform weist bevorzugt den Vorteil auf, dass das Einleiten von Brüden aus dem zweiten Behälter in den ersten Behälter eine Kühlung der Masse im zweiten Behälter nach kurzer Verweilzeit ergibt, insbesondere nach Dosierung ausschließlich der wasserhaltigen Bestandteile der ersten Masse in den ersten Behälter, da die festen Inhaltsstoffe erst anschließend an das Einleiten der Brüden erfolgt. Aus der kurzen Verweilzeit der Masse im zweiten Behälter bei erhöhter Temperatur ergibt sich eine geringe thermische Belastung dieser Masse, die z.B. zu einer geringeren Verfärbung führt.

Bevorzugt weist die Vorrichtung eine an den ersten Behälter angeschlossene Saugeinrichtung zum Absaugen von Gas, z.B. von Luft und/oder Brüden auf. Die Saugeinrichtung kann eine Vakuumpumpe sein. Die Saugeinrichtung ist z.B. eingerichtet, einen Unterdruck von -1 bis -0,2 bar, insbesondere von -0,5 bar, bestimmt vom Normaldruck, im ersten Behälter zu erzeugen. Die Saugeinrichtung ist oberhalb der maximalen Füllhöhe des ersten Behälters angeschlossen, z.B. im Deckel des ersten Behälters, optional an der Abgasleitung. Diese Ausführungsform hat den Vorteil, dass beim Verfahren ein Unterdruck an den ersten Behälter angelegt werden kann, der bei geöffnetem Brüdenventil durch die Brüdenleitung in den zweiten Behälter wirken kann und den Übertritt von Brüden aus der im zweiten Behälter angeordneten Masse in den ersten Behälter verstärkt und/oder beschleunigt. Die Beschleunigung der Brüdenableitung aus dem zweiten Behälter führt zu einer schnelleren Kühlung der im zweiten Behälter befindlichen Masse, insbesondere auf eine dem reduzierten Druck entsprechende niedrigere Temperatur, und damit zu einer Verringerung von deren thermischer Belastung. Bevorzugt führt das Anlegen von Unterdruck an den ersten Behälter zu einer Verstärkung des Übertritts von Brüden aus der im zweiten Behälter befindlichen Masse, und damit zusätzlich zur Temperaturerniedrigung zu einer Erhöhung von deren Trockensubstanzgehalt. Bevorzugt führt das Anlegen von Unterdruck an den ersten Behälter zu einer Verstärkung des Übertritts von Brüden aus der im zweiten Behälter befindlichen Masse in die erste Masse, die im ersten Behälter angeordnet ist und damit zu einer Erhöhung des Energieeintrags in diese Masse und zu einer weiteren Erniedrigung von deren Trockensubstanzgehalt bzw. Erhöhung des Wassergehalts.

Generell ist bevorzugt, die Schritte des Verfahrens zyklisch zu wiederholen, um satzweise Süßwarenmasse herzustellen. Entsprechend weist die Vorrichtung vorzugsweise eine Steuereinrichtung auf, die eingerichtet ist, die Elemente der Vorrichtung, insbesondere die Ventile, für die zyklische Abfolge der Verfahrensschritte zu steuern.

In der bevorzugten Ausführungsform, in der der erste und/oder der zweite Behälter mit einer Druckgasquelle verbunden ist, die insbesondere unter der Kontrolle durch eine Steuereinrichtung eingerichtet ist, den ersten und/oder den zweiten Behälter mit Druckgas zu beaufschlagen, erlaubt die Vorrichtung das Aufheizen des ersten Behälters auf die Zieltemperatur bei geringem oder ohne Verdampfen von Wasser aus der ersten Masse innerhalb des ersten Behälters, was wiederum eine präzise Dosierung erlaubt, da die erste Mischung auch kein zusätzliches Rezeptwasser zu enthalten braucht, das in den unter Druck stehenden geschlossenen ersten Behälter ausdampfen könnte.

In dieser Ausfiihrungsform erlaubt die Rückführung von Brüden aus dem zweiten Behälter in den ersten Behälter die Wirkung des Brüdens als zusätzliches Lösungswasser im ersten Behälter, ohne dass der Trockensubstanzgehalt der Masse, die schließlich aus dem zweiten Behälter durch die zweite Auslassleitung austritt, verringert würde.

Die Vorrichtung kann zumindest zwei erste Behälter aufweisen, die mit jeweils einer ersten Auslassleitung und bevorzugt jeweils einer Brüdenleitung an einen zweiten Behälter angeschlossen sind, so dass satzweise erste Masse alternierend von den ersten Behältern in den eine zweiten Behälter geleitet wird.

Das Verfahren zur Herstellung einer Süßwarenmasse, insbesondere mit einer erfindungsgemäßen Vorrichtung, weist den Schritt des a) Dosierens fester wasserlöslicher und wasserhaltiger Inhaltsstoffe zu einer ersten Masse in einen ersten Behälter, der beheizbar ist und ein Rührwerk und ein erstes Auslassventil in einer mit einem zweiten Behälter verbundenen ersten Auslassleitung aufweist, auf und b) des Erwärmens des ersten Behälters auf eine Zieltemperatur, und zeichnet sich dadurch aus, dass c) die Zieltemperatur oberhalb der Siedetemperatur der ersten Masse bei Umgebungsdruck ist, d) das Erwärmen unter druckdichtem Verschließen des ersten Behälters bis zum vollständigen Lösen der festen wasserlöslichen Inhaltsstoffe erfolgt, e) Öffnen des ersten Auslassventils zum Leiten der ersten Masse in den zweiten Behälter, f) Schließen des ersten Auslassventils zum druckdichtem Verschließen des zweiten Behälters, g) Entspannen des Drucks aus dem ersten Behälter durch Öffnen eines Abgasventils, das am ersten Behälter angebracht ist, h) Dosieren eines weiteren Satzes der ersten Masse in den ersten Behälter, i) Einleiten von Brüden aus dem zweiten Behälter in den ersten Behälter durch Öffnen des Brüdenventils einer Brüdenleitung, die den zweiten Behälter mit dem ersten Behälter verbindet, j) Schließen des Brüdenventils und k) Austreten der Masse aus dem zweiten Behälter durch Öffnen eines zweiten Auslassventils, das in einer zweiten Auslassleitung des zweiten Behälters angeordnet ist. Vorzugsweise werden die Schritte b) bis k) zyklisch wiederholt. Für eine kontinuierliche satzweise Herstellung mit dem Verfahren werden die Schritte b) bis k) zyklisch wiederholt, nachdem anfänglich Schritt a) erfolgt ist. Insbesondere bei einem solchen zyklischen Verfahren wird in Schritt h) als weiterer Satz der ersten Masse die wasserhaltigen Inhaltsstoffe der ersten Masse, insbesondere Glukosesirup, optional Wasser, bevorzugt ausschließlich die wasserhaltigen Inhaltsstoffe der ersten Masse, in den ersten Behälter dosiert, anschließend die Schritte i) und j) durchgeführt und dann die festen Inhaltsstoffe der ersten Masse in den ersten Behälter dosiert werden, insbesondere kristalliner Zucker und/oder Zuckeraustauschstoff, bevor die Schritte b) bis g) durchgeführt werden. Bevorzugt weist das Verfahren zur Herstellung einer Süßwarenmasse den Schritt des Dosierens fester wasserhaltiger Inhaltsstoffe in einen ersten Behälter auf, der beheizbar ist und ein Rührwerk und ein erstes Auslassventil in einer mit einem zweiten Behälter verbundenen ersten Auslassleitung aufweist, und des Erwärmens des ersten Behälters auf eine Zieltemperatur, wobei die Zieltemperatur eine Temperatur oberhalb der Siedetemperatur der ersten Masse bei Umgebungsdruck ist, des Einleitens von Brüden aus einem zweiten Behälter in den ersten Behälter durch Öffnen eines Brüdenventils einer Brüdenleitung, die den zweiten Behälter mit dem ersten Behälter verbindet, des Dosierens fester wasserlöslicher Inhaltsstoffe in den ersten Behälter, des Erwärmens unter druckdichtem Verschließen des ersten Behälters bis zum vollständigen Lösen der festen wasserlöslichen Inhaltsstoffe zur Erzeugung einer ersten Masse, des Öffnen des ersten Auslassventils zum Einleiten der in dem ersten Behälter enthaltenen ersten Masse in den zweiten Behälter, des Schließens des ersten Auslassventils zum druckdichtem Verschließen des zweiten Behälters, des Entspannens des Drucks aus dem ersten Behälter durch Öffnen eines Abgasventils, das am ersten Behälter angebracht ist und des Öffnens des zweiten Auslassventils, das in der zweiten Auslassleitung am zweiten Behälter angebracht ist, um die Masse austreten zu lassen. Optional können die festen wasserlöslichen Inhaltsstoffe mit den wasserhaltigen Inhaltsstoffen in den ersten Behälter dosiert werden, so dass das Dosieren der festen wasserlöslichen Inhaltsstoffe in den ersten Behälter nach Einleiten der Brüden in den ersten Behälter entfällt.

Generell kann die erfindungsgemäße Vorrichtung in einer Anlage enthalten sein, in der im Anschluss an die Austragseinrichtung, die an der zweiten Auslassleitung angeordnet ist, eine Formungseinrichtung und/oder Kühleinrichtung angeordnet ist, wahlweise mit einem zusätzlichen Ausdampfgefäß, bevorzugt mit einer atmosphärischen Ausdampfkammer und/oder einer anschließenden optionalen vakuumierten Ausdampfkammer, die zwischen der Austragseinrichtung der zweiten Auslassleitung und einer Formungs- und/oder Kühleinrichtung angeordnet ist. Weiter optional kann im Anschluss an die Austragseinrichtung, die an der zweiten Auslassleitung angeschlossen ist, ein herkömmlicher satzweise oder kontinuierlich arbeitender Kocher angeordnet sein, beispielsweise ein Schlangenkocher, Dünnschichtkocher und/oder ein Rohrbündelwärmetauscher, vorzugsweise mit daran anschließendem Ausdampfgefäß.

### Genaue Beschreibung der Erfindung

Die Erfindung wird nun genauer mit Bezug auf die Figuren beschrieben, die schematisch in
Figur 1 eine erfindungsgemäße Vorrichtung,
- Figur 2 eine Ausfiihrungsform des ersten Behälters,
Figur 3 eine Ausführungsform einer Dosiereinrichtung mit dem ersten Behälter,
- in Figur 4 eine weitere Dosiereinrichtung mit dem ersten Behälter und
in Figur 5 eine bevorzugte Ausführungsform zeigen.

In den Figuren bezeichnen gleiche Bezugsziffern funktionsgleiche Elemente.

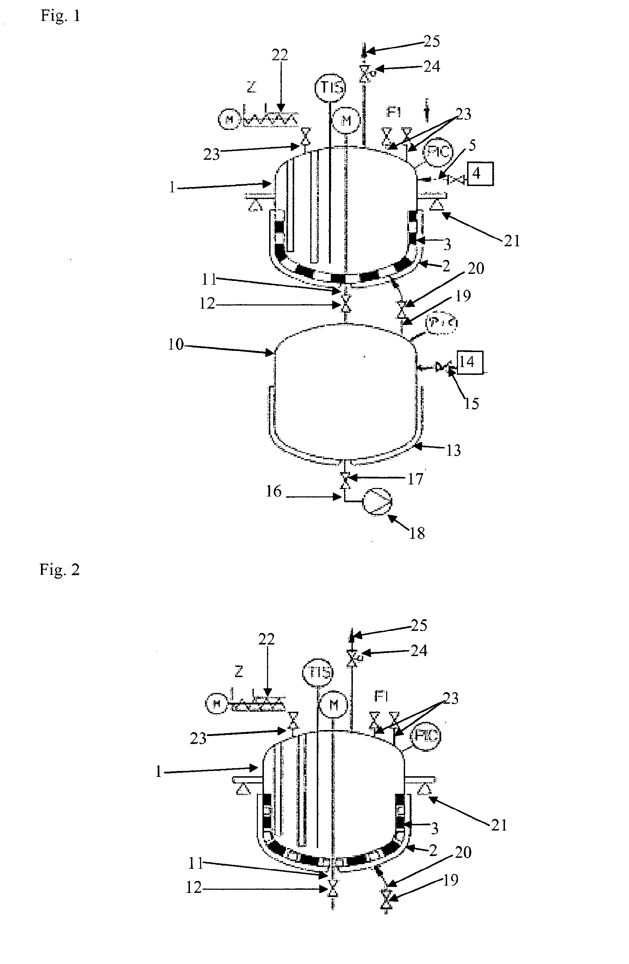

Figur 1 zeigt eine erfindungsgemäße Vorrichtung, die einen ersten Behälter 1 aufweist, der mittels eines Doppelmantels 2 beheizbar ist und ein Rührwerk 3 mit Antrieb M enthält, dessen Rührelemente vorzugsweise mit geringem Abstand, insbesondere anliegend über die Innenwandung des ersten Behälters 1 geführt sind.
Der erste Behälter 1 ist druckdicht verschließbar und kann z.B. einen zu Reinigungszwecken abnehmbaren Deckel aufweisen, der druckdicht zu befestigen ist. Entsprechend der bevorzugten Ausführungsform weist der erste Behälter 1 eine Druckgasquelle 4 auf, die mittels einer Druckgasleitung 5 mit Ventil an dem ersten Behälter 1 angeschlossen ist.

Ein zweiter Behälter 10 ist mittels einer ersten Auslassleitung 11 mit dem ersten Behälter 1 verbunden. Die erste Auslassleitung 11 ist mittels eines ersten Auslassventils 12 druckdicht verschließbar. Die erste Auslassleitung 11 mündet im Bodenbereich des ersten Behälters 1, um ein vollständiges Entleeren des ersten Behälters 1 in den zweiten Behälter 10 zu erlauben. Der zweite Behälter 10 weist einen zweiten Doppelmantel 13 als Heizeinrichtung auf und entsprechend der bevorzugten Ausführungsform eine zweite Druckgasleitung 15, an die eine zweite Druckgasquelle 14 angeschlossen sein kann, wobei die zweite Druckgasquelle 14 gemeinsam mit der ersten Druckgasquelle 4 ausgebildet sein kann. Die zweite Druckgasleitung 15 weist ein Ventil auf. Entsprechend der generell bevorzugten Ausführungsform ist das Ventil der ersten Druckgasleitung 5 und das Ventil der zweiten Druckgasleitung 15 durch die Steuereinrichtung (nicht gezeigt) gesteuert.

Bevorzugt weisen der erste Behälter 1 und der zweite Behälter 10 jeweils einen Drucksensor PIC und einen Temperatursensor TIS auf, die besonders bevorzugt jeweils mit der Steuereinrichtung verbunden sind, und eingerichtet sind, Meßsignale an die Steuereinrichtung zu übermitteln.

Zum Entleeren des zweiten Behälters 10 weist dieser eine zweite Auslassleitung 16 auf, die mittels eines zweiten Auslassventils 17 druckdicht verschließbar ist. An der zweiten Auslassleitung 16 ist stromabwärts des zweiten Auslassventils 17 bevorzugt eine Austragseinrichtung 18 angeordnet, insbesondere eine Pumpe, um auch nach Entspannen des Überdrucks aus dem zweiten Behälter 10 darin enthaltene Masse auszutragen.

Entsprechend der bevorzugten Ausführungsform weist die in Figur 1 gezeigte Vorrichtung eine Brüdenleitung 19 mit einem darin angeordneten Brüdenventil 20 auf. Die Brüdenleitung 19 verbindet den oberen Bereich des zweiten Behälters 10 mit dem ersten Behälter 1, bevorzugt in dessen Bodenbereich.

Bevorzugt ist das Brüdenventil 20 mit der Steuereinrichtung verbunden und durch die Steuereinrichtung gesteuert, beispielsweise abhängig von einem Signal eines am ersten Behälter 1 und/oder am zweiten Behälter 10 angeordneten Drucksensors PIC und/oder eines am ersten Behälter 1 oder am zweiten Behälter 10 angeordneten Temperatursensors TIS.

Als Dosiereinrichtung weist diese Vorrichtung Wiegezellen 21 auf, auf denen der erste Behälter 1 aufliegt, und eine motorisch angetriebene gesteuerte Zuführeinrichtung 22, die über eine mit einem Ventil verschließbare Zuführleitung 23 mit dem ersten Behälter 1 verbunden ist. Zur Zudosierung von Flüssigkeiten, beispielsweise von Glucosesirup und/oder weiteren festen oder wasserhaltigen Inhaltsstoffen, z.B. Wasser, kann der erste Behälter 1 weitere mit jeweils einem Ventil verschließbare Zuführleitungen 23 aufweisen, an die Vorratsbehälter für flüssige Inhaltsstoffe angeschlossen werden können.

Bevorzugt weist der erste Behälter 1 eine über ein Abgasventil 24 druckdicht verschließbare Abgasleitung 25 auf, wobei wiederum vorzugsweise das Abgasventil 24 mit der Steuereinrichtung verbunden ist und durch die Steuereinrichtung gesteuert ist.

Bei der Durchführung des erfindungsgemäßen Verfahrens werden die Inhaltsstoffe einer ersten Masse in den ersten Behälter 1 rezeptgetreu mittels der Dosiereinrichtung eingefüllt, insbesondere mit einem Trockensubstanzgehalt von zumindest 85%, bevorzugt von zumindest 90%. Vorzugsweise weist eine erste Mischung, die in den ersten Behälter 1 eingefüllt wird, einen so hohen Trockensubstanzgehalt auf, beispielsweise von zumindest 90 Gew.-% Trockensubstanz, dass bei Umgebungsdruck die zum Lösen erforderliche Temperatur nicht erreichbar ist.

Kristallzucker kann beispielsweise durch eine Zuführeinrichtung 22 in Form einer Förderschnecke mittels einer Zuführleitung 23 zugeführt werden, während flüssige Bestandteile durch weitere Zuführleitungen 23 zugeführt werden. Die Wiegezellen 21 können zur Bestimmung der zugegebenen Massen und insbesondere zur Steuerung der Zuführeinrichtungen bzw. zur Steuerung der Ventile der Zuführleitungen 23 eingesetzt werden.

Das Rührwerk 3 dient zur Durchmischung der Inhaltsstoffe im ersten Behälter 1, insbesondere während der Beheizung mittels des Doppelmantels 2. Bevorzugt wird der erste Behälter 1 vor Erreichen der Siedetemperatur mit Druckgas beaufschlagt, das von einer Druckgasquelle 4 durch die Druckgasleitung 5 mittels Steuerung des Ventils der Druckgasleitung 5 zugeführt wird. Der Doppelmantel 2 wird zur Beheizung des ersten Behälters 1 bis auf die Zieltemperatur eingesetzt, bei der eine vollständige Lösung aller wasserlöslichen Inhaltsstoffe erreicht wird, insbesondere bis zur Erzeugung einer einphasigen oder homogenen ersten Masse.

Die Steuereinrichtung ist vorzugsweise eingerichtet, während des Aufheizens des Doppelmantels 2, bzw. bei Druckbeaufschlagung des ersten Behälters 1 den ersten Behälter 1 druckdicht zu verschließen, insbesondere die Ventile der Zuführleitungen 23, das erste Auslassventil 12, das Brüdenventil 20 und ggf. das Ventil der Druckgasleitung 5 zu schließen. Nach vollständigem Lösen der wasserlöslichen Bestandteile wird optional der zweite Behälter 10 mittels der Druckgasleitung 15 mit Druckgas beaufschlagt, insbesondere bis auf einen Druck im zweiten Behälter 10, der unterhalb des Gesamtdrucks des ersten Behälters 1 liegt, z.B. um 0,1 bis 1 bar, vorzugsweise um maximal 0,5 bar unterhalb des Drucks, der im ersten Behälter anliegt. Entsprechend ist die Steuereinrichtung eingerichtet, den zweiten Behälter 10 durch Steuerung des Ventils der zweiten Druckgasleitung 15 mit Druckgas zu beaufschlagen, bis ein Druck unterhalb des Drucks im ersten Behälter 1 erreicht ist.

Anschließend wird die erste Masse aus dem ersten Behälter 1 durch Öffnen des ersten Auslassventils 12 durch die erste Auslassleitung 11 in den zweiten Behälter 10 geleitet, vorzugsweise allein durch Wirkung der Schwerkraft bei Anordnung des ersten Behälters 1 oberhalb des zweiten Behälters 10 und/oder mittels eines Überdrucks innerhalb des ersten Behälters 1 gegenüber dem Druck des zweiten Behälters 10, wobei der Druck im ersten Behälter 1 vorzugsweise mittels Zuführung von Druckgas durch die erste Druckgasleitung 5 in den ersten Behälter 1 erzeugt wird.

Im Anschluss an das Überleiten der Masse aus dem ersten Behälter 1 in den zweiten Behälter 10, wobei der zweite Behälter 10 ansonsten druckdicht verschlossen ist, insbesondere das zweite Auslassventil 17 und das Brüdenventil 20 geschlossen sind, wird das erste Auslassventil 12 geschlossen. Anschließend kann der Druck aus dem ersten Behälter 1 entspannt werden, z.B. mittels des Abgasventils 24 in der Abgasleitung 25. Bei Beaufschlagung des ersten Behälters 1 mittels Druckgas wird der Überdruck im ersten Behälter 1 durch das Druckgas erzeugt, so dass beim Öffnen des Abgasventils 24 im Wesentlichen Druckgas entweicht, mit einem geringen Anteil Brüden oder ohne Brüden. Nach Entspannen des Überdrucks aus dem ersten Behälter 1 kann ein weiterer Satz der ersten Masse mittels der Dosiereinrichtung durch die Zuführleitungen 23 in den ersten Behälter 1 gefüllt werden und die Schritte des Verfahrens können zyklisch durchlaufen werden. Anschließend wird der erste Behälter 1 unter Rühren mittels des Rührwerks 3 erwärmt, wobei bevorzugt das Brüdenventil 20 der Brüdenleitung 19 geöffnet wird, um den Brüden aus dem zweiten Behälter 10 in den ersten Behälter 1 übertreten zu lassen.

Nach Übertritt des Brüdens vom zweiten Behälter 10 in den ersten Behälter 1 wird das Brüdenventil 20 geschlossen und der erste Behälter 1 wird druckdicht verschlossen und, optional nach Druckbeaufschlagung mittels Druckgas, wiederum auf die Zieltemperatur erwärmt.

Figur 2 zeigt eine bevorzugte Ausführungsform des Rührwerks 3 im ersten Behälter 1, nämlich ein Rührwerk 3 mit Gegenräumern.

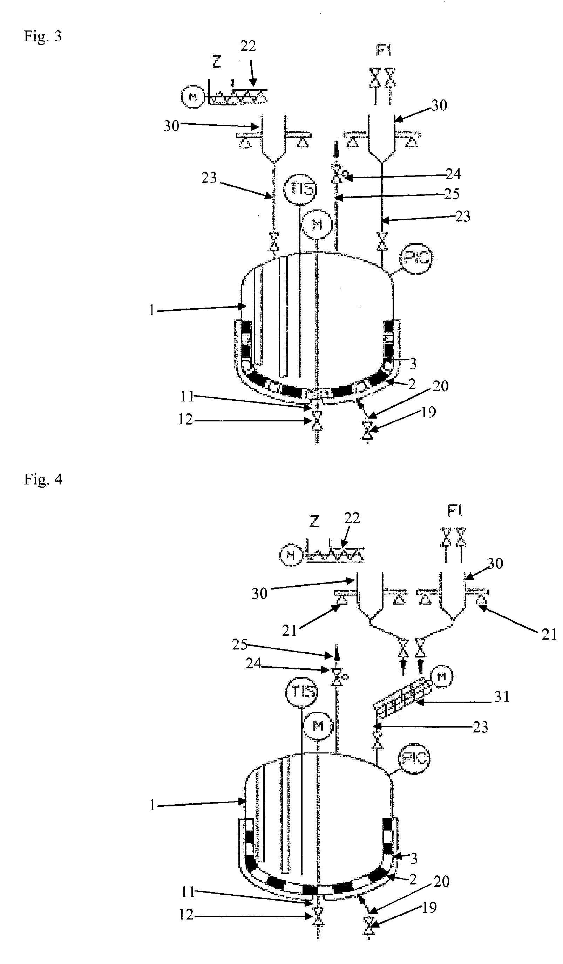

In Figur 3 ist eine alternative Ausführungsform der Dosiereinrichtung vom ersten Behälter 1 gezeigt, bei der der erste Behälter 1 keine Wiegezellen 21 aufweist, jedoch in den Zuführleitungen 23 Zwischenwiegebehälter 30 angeordnet sind, die an Wiegezellen 21 gelagert sind, und eine Zuführeinrichtung 22 feste Inhaltsstoffe, beispielsweise Kristallzucker Z, gesteuert in einen Zwischenwiegebehälter 30 befördert, und flüssige Inhaltsstoffe Fl in einen weiteren Zwischenwiegebehälter 30 dosiert werden, der auf Wiegezellen 21 gelagert ist.

Figur 4 zeigt eine Fortbildung der Ausführungsform der Dosiereinrichtung von Figur 3 dahingehend, dass die Zwischenwiegebehälter 30 mit einem Mischer 31, der statisch oder motorbetrieben M sein kann, münden, wobei der Mischer 31 mittels einer Zuführleitung 23 mit dem ersten Behälter 1 verbunden ist.

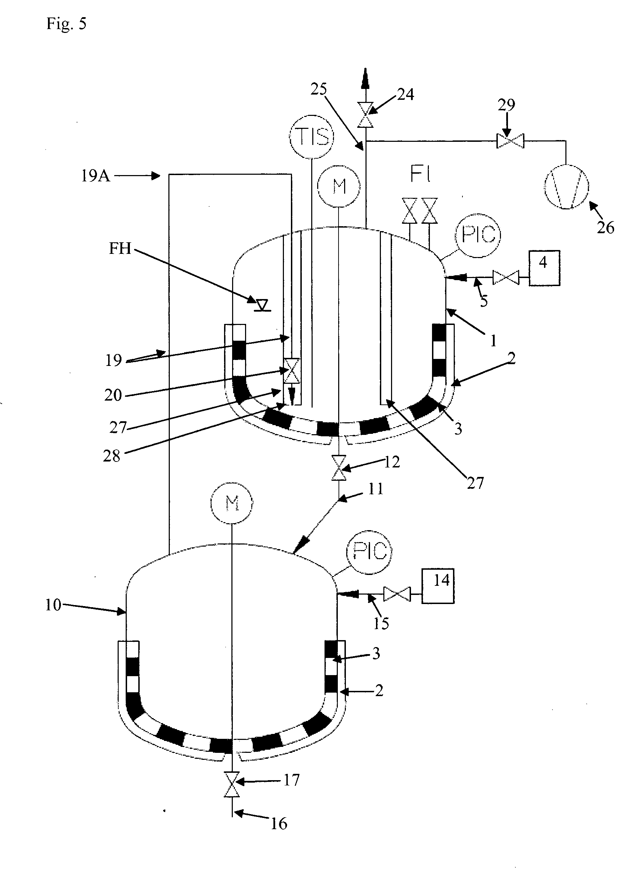

Figur 5 zeigt, dass bevorzugt ein erster Behälter 1 mittels einer Brüdenleitung 19, die im Deckel des zweiten Behälters 10 angeschlossen ist, mit dem zweiten Behälter 10 so verbunden ist, dass die Brüdenleitung 19 zumindest in einem Abschnitt 19A oberhalb der maximalen Füllhöhe FH des ersten Behälters 1 verläuft. Innerhalb des ersten Behälters 1 mündet die Brüdenleitung 19, wie generell bevorzugt, unterhalb der maximalen Füllhöhe FH des ersten Behälters 1. Die Brüdenleitung 19 ist innerhalb eines Strombrechers 27 angeordnet. Das Brüdenventil 20 ist im Mündungsabschnitt der Brüdenleitung angeordnet. Der Strombrecher 27, der von der Brüdenleitung 19 gebildet sein kann, oder die Brüdenleitung 19 selbst kann an ihrer Mündung einen Verteiler 28 aufweisen, der aus der Brüdenleitung 19 austretenden Brüden in die im ersten Behälter 1 gefüllte Masse verteilt.

Figur 5 zeigt eine Saugeinrichtung 26 in Form einer Vakuumpumpe, die an der Abgasleitung 25 angeschlossen ist. Optional ist in der Leitung, die die Saugeinrichtung 26 mit dem ersten Behälter 1 verbindet, ein Ventil 29 angeordnet.

| | |
|---|---|
| Bezugszeichenliste: | 21 Wiegezellen |
| 1 erster Behälter | 22 Zuführeinrichtung |
| 2 Doppelmantel | 23 Zuführleitung |
| 3 Rührwerk | 24 Abgasventil |
| 4 Druckgasquelle | 25 Abgasleitung |
| 5 Druckgasleitung | 26 Saugeinrichtung |
| 10 zweiter Behälter | 27 Strombrecher |
| 11 erste Auslassleitung | 28 Verteiler |
| 12 erstes Auslassventil | 29 Ventil |
| 13 zweiter Doppelmantel | 30 Zwischenwiegebehälter |
| 14 zweite Druckgasquelle | 31 Mischer |
| 15 zweite Druckgasleitung | M Antrieb |
| 16 zweite Auslassleitung | PIC Drucksensor |
| 17 zweites Auslassventil | TIS Temperatursensor |
| 18 Austragseinrichtung | Z Kristallzucker |
| 19 Brüdenleitung | FI flüssige Inhaltsstoffe |
| 19A Abschnitt der Brüdenleitung | FH Füllhöhe |
| 20 Brüdenventil | |

## Patentansprüche

1. Vorrichtung für die Herstellung von Süßwarenmasse mit zumindest einem beheizbaren ersten Behälter (1), der ein Rührwerk (3) aufweist und eine erste Auslassöffnung (11) mit einem ersten Auslassventil (12) aufweist, die mit einem zweiten Behälter (10) verbunden ist, dessen zweite Auslassleitung (16) mittels eines zweiten Auslassventils (17) verschließbar ist,
**dadurch gekennzeichnet, dass** der erste Behälter (1) druckdicht verschließbar ist und der zweite Behälter (10) druckdicht verschließbar ist und dass der erste Behälter (1) mittels einer Brüdenleitung (19) mit dem zweiten Behälter (10) verbunden ist, die mittels eines Brüdenventils (20) druckdicht verschließbar ist.

2. Vorrichtung nach Anspruch 1, **dadurch gekennzeichnet, dass** der erste Behälter (1) mittels einer Druckgasleitung (5), die ein Ventil aufweist, mit einer Druckgasquelle (4) verbunden ist und mit Druckgas beaufschlagbar ist.

3. Vorrichtung nach einem der voranstehenden Ansprüche, **dadurch gekennzeichnet, dass** zumindest zwei erste Behälter (1) mittels jeweils einer ersten Auslassleitung (11), die jeweils ein erstes Auslassventil (12) aufweist, mit einem gemeinsamen zweiten Behälter (10) verbunden sind.

4. Vorrichtung nach einem der voranstehenden Ansprüche, **dadurch gekennzeichnet, dass** am ersten Behälter (1) eine Saugeinrichtung (26) zum Absaugen von Gas angeschlossen ist.

5. Vorrichtung nach einem der voranstehenden Ansprüche, **dadurch gekennzeichnet, dass** an der zweiten Auslassleitung (16) eine Austragseinrichtung (18) mit daran angeschlossenem Kocher und einem Ausdampfgefäß angeschlossen ist.

6. Vorrichtung nach einem der voranstehenden Ansprüche, **dadurch gekennzeichnet, dass** der erste Behälter (1) eine Abgasleitung (25) aufweist, die über ein Abgasventil (24) druckdicht verschließbar ist und eine Dosiereinrichtung, die über Zuführleitungen (23) mit dem ersten Behälter (1) verbunden sind, die mit jeweils einem Ventil druckdicht verschließbar sind.

7. Vorrichtung nach einem der voranstehenden Ansprüche, **dadurch gekennzeichnet, dass** der erste Behälter einen Temperatursensor (TIS) und einen Drucksensor (PIC) aufweist und der zweite Behälter (10) einen Drucksensor (PIC) aufweist, die jeweils mit einer Steuereinrichtung verbunden sind und die Steuereinrichtung eingerichtet ist, das Brüdenventil (20) abhängig von den Signalen des Temperatursensors (TIS) des ersten Behälters (1) und der Drucksensoren (PIC) des ersten Behälters (1) und des zweiten Behälters (10) zu steuern.

8. Vorrichtung nach einem der voranstehenden Ansprüche, **dadurch gekennzeichnet, dass** sie eine Steuereinrichtung aufweist, die eingerichtet ist, die Einfüllung wasserhaltiger Inhaltsstoffe einer ersten Masse in den ersten Behälter (1), das Öffnen des Brüdenventils (20) zur Einleitung von Brüden aus dem zweiten Behälter (10) in den ersten Behälter (1) und die anschließende Einfüllung der festen wasserlöslichen Inhaltsstoffe der ersten Masse in den ersten Behälter (1), das anschließende Verschließen der in den am ersten Behälter (1) angeschlossenen Leitungen angeordneten Ventile (12, 20) und Erwärmen des ersten Behälters (1) und das Öffnen und anschließende Schließen des zweiten Auslassventils (17) zu steuern.

9. Vorrichtung nach einem der voranstehenden Ansprüche, **dadurch gekennzeichnet, dass** die Brüdenleitung (19) abschnittsweise oberhalb der maximalen Füllhöhe des ersten Behälters (1) geführt ist und die Mündung der Brüdenleitung (19) innerhalb des ersten Behälters unterhalb der maximalen Füllhöhe (FH) des ersten Behälters (1) angeordnet ist.

10. Verfahren zur Herstellung einer Süßwarenmasse mit dem Schritt des
a) Dosierens fester wasserhaltiger Inhaltsstoffe in einen ersten Behälter (1), der beheizbar ist und ein Rührwerk (3) und ein erstes Auslassventil (12) in einer mit einem zweiten Behälter (10) verbundenen ersten Auslassleitung (11) aufweist, und
b) des Erwärmens des ersten Behälters (1) auf eine Zieltemperatur, **dadurch gekennzeichnet, dass** die Zieltemperatur eine Temperatur oberhalb der Siedetemperatur der ersten Masse bei Umgebungsdruck ist,
c) des Einleitens von Brüden aus einem zweiten Behälter (10) in den ersten Behälter (1) durch Öffnen eines Brüdenventils (20) einer Brüdenleitung (19), die den zweiten Behälter (10) mit dem ersten Behälter (1) verbindet,
d) des Dosierens fester wasserlöslicher Inhaltsstoffe in den ersten Behälter (1),
e) des Erwärmens unter druckdichtem Verschließen des ersten Behälters (1) bis zum vollständigen Lösen der festen wasserlöslichen Inhaltsstoffe zur Erzeugung einer ersten Masse,
f) des Öffnen des ersten Auslassventils (12) zum Leiten der in dem ersten Behälter (1) enthaltenen ersten Masse in den zweiten Behälter (10),
g) des Schließens des ersten Auslassventils (12) zum druckdichtem Verschließen des zweiten Behälters (10),
h) des Entspannens des Drucks aus dem ersten Behälter (1) durch Öffnen eines Abgasventils (24), das am ersten Behälter (1) angebracht ist.

11. Verfahren nach Anspruch 10, **dadurch gekennzeichnet, dass** der erste Behälter (1) während des Überleitens der ersten Masse in den zweiten Behälter (10) mit Druckgas beaufschlagt wird.

12. Verfahren nach einem der Ansprüche 10 bis 11, **dadurch gekennzeichnet, dass** der erste Behälter (1) vor Erreichen der Siedetemperatur der ersten Masse bei Umgebungsdruck mit Druckgas beaufschlagt wird, bis mindestens auf den Druck, den die erste Masse bei der Zieltemperatur hat.

13. Verfahren nach einem der Ansprüche 10 bis 12, **dadurch gekennzeichnet, dass** der zweite Behälter (10) vor dem Einleiten der ersten Masse aus dem ersten Behälter (1) mittels Druckgas mit Druck beaufschlagt wird.

14. Verfahren nach einem der Ansprüche 10 bis 13, **dadurch gekennzeichnet, dass** während des Einleitens von Brüden aus einem zweiten Behälter (10) in den ersten Behälter (1) Gas mittels einer Saugeinrichtung (26) aus dem ersten Behälter (1) abgesaugt wird.

15. Verfahren nach einem der Ansprüche 10 bis 14, **dadurch gekennzeichnet, dass** das Verfahren zyklisch durchgeführt wird.

16. Verfahren nach einem der Ansprüche 10 bis 14, **dadurch gekennzeichnet, dass** feste wasserlösliche Inhaltsstoffe anstelle von Schritt d) in Schritt a) in den ersten Behälter (1) dosiert werden.

## Claims

1. A device for the manufacture of confectionery mass having at least one heatable first container (1), which exhibits an agitator (3) and includes a first outlet opening (11) with a first exhaust valve (12), which is connected to a second container (10), whose second outlet pipe (16) is closable by means of a second exhaust valve (17),
**characterised in that** the first container (1) is closable in a pressure-tight manner and the second container (10) is closable in a pressure-tight manner and that the first container (1) is connected to the second container (10) by means of an exhaust steam pipe (19) which is closable in a pressure-tight manner by means of an exhaust steam valve (20).

2. A device according to claim 1, **characterised in that** the first container (1) is connected to a compressed gas source by means of a compressed gas pipe (5) which has a valve and can be subjected to compressed gas.

3. A device according to one of the previous claims, **characterised in that** at least two first containers (1) are connected to a second common container (10), each by means of a first outlet pipe (11) which respectively includes a first exhaust valve (12).

4. A device according to one of the previous claims, **characterised in that** a suction device (26) is connected to the first container (1) for expelling gas.

5. A device according to one of the previous claims, **characterised in that** a discharge device (18) fitted with its cooker and an evaporation vessel is connected to the second outlet pipe (16).

6. A device according to one of the previous claims, **characterised in that** the first container (1) includes an exhaust gas pipe (25), which is closable in a pressure-tight manner via an exhaust gas valve (24) and a dosing device, whereas said pipe and said device are connected to the first container (1) via supply pipes (23), which are closable in a pressure-tight manner via a valve each.

7. A device according to one of the previous claims, **characterised in that** the first container includes a temperature sensor (TIS) and a pressure sensor (PIC) and that the second container (10) exhibits a pressure sensor (PIC), which containers are respectively connected to a control device and the control device is designed, to control the exhaust steam valve (20) depending on the signals of the temperature sensor (TIS) of the first container (1) and of the pressure sensors (PIC) of the first container (1) and of the second container (10).

8. A device according to one of the previous claims, **characterised in that** it includes a control device, which is adapted to control the filling of aqueous ingredients of a first mass into the first container (1), the opening of the exhaust steam valve (20) for introducing exhaust steams from the second container (10) into the first container (1) and the subsequent filling of the solid water-soluble ingredients of the first mass into the first container (1), the subsequent closing of the valves (12, 20) arranged in the pipes connected to the first container (1) as well as the heating of the first container (1) and the opening followed by the closing of the second exhaust valve (17).

9. A device according to one of the previous claims, **characterised in that** the exhaust steam pipe (19) is run by sections above the maximum filling height of the first container (1) and that the mouth of the exhaust steam pipe (19) is arranged inside the first container under the maximum filling height (FH) of the first container (1).

10. A method of manufacture of confectionery mass comprising
a) dosing solid aqueous ingredients into a first container (1), which can be heated and includes an agitator (3) and a first outlet valve (12) in a first outlet pipe (11) connected to a second container (10), and
b) heating the first container (1) to a target temperature, **characterised in that** the target temperature is a temperature above the boiling temperature of the first mass at ambient pressure,
c) introducing exhaust steams from a second container (10) into the first container (1) by opening an exhaust steam valve (20) of an exhaust steam pipe (19), which connects the second container (10) to the first container (1),
d) dosing solid water-soluble ingredients into the first container (1),
e) heating the first container (1) with pressure-tight closing until the solid water-soluble ingredients have been dissolved completely to form a first mass,
f) opening the first outlet valve (12) to convey the first mass contained in the first container (1) into the second container (10),
g) closing the first outlet valve (12) for pressure-tight closing of the second container (10),
h) relaxing the pressure from the first container (1) by opening an exhaust gas valve (24), which is arranged on the first container (1).

11. A method according to claim 10, **characterised in that** the first container (1) is subjected to compressed gas when transferring the first mass into the second container (10).

12. A method according to any of the claims 10 to 11, **characterised in that** the first container (1) is subjected to compressed gas before reaching the boiling temperature of the first mass at ambient pressure, at least up to the pressure corresponding to the target temperature of the first mass.

13. A method according to any of the claims 10 to 12, **characterised in that** the second container (10) is subjected to pressure by means of compressed gas before introducing the first mass from the first container (1).

14. A method according to any of the claims 10 to 13, **characterised in that** gas is sucked off by means of a suction device (26) from the first container (1) when introducing exhaust steams from a second container (10) into the first container (1).

15. A method according to any of the claims 10 to 14, **characterised in that** the method is carried out cyclically.

16. A method according to any of the claims 10 to 14, **characterised in that** solid water-soluble ingredients are dosed into the first container (1) in step a) instead of step d).

## Revendications

1. Dispositif de fabrication de masse de confiserie présentant au moins un premier contenant chauffable (1), comprenant un agitateur (3) et présentant une première ouverture de décharge (11) avec une première soupape de décharge (12) qui est connectée à un second contenant (10), dont la seconde conduite d'évacuation (16) peut être fermée à l'aide d'une seconde soupape d'évacuation (17),
**caractérisé en ce que** le premier contenant (1) peut être refermé hermétiquement et le second contenant (10) peut être refermé hermétiquement et que le premier contenant (1) est connecté au second contenant (10) à l'aide d'une conduite des fumées d'évacuation (19) qui peut être refermée hermétiquement à l'aide d'une soupape d'évacuation des fumées (20).

2. Dispositif selon la revendication 1, **caractérisé en ce que** le premier contenant (1) est connecté à une source de gaz sous pression (4) à l'aide d'une conduite de gaz sous pression (5), qui présente une soupape et qui peut être soumise à un gaz sous pression.

3. Dispositif selon l'une des revendications précédentes, **caractérisé en ce qu'**au moins deux premiers contenants (1) sont respectivement connectés à un second contenant commun (10) à l'aide d'une première conduite de décharge (11), présentant respectivement une première soupape de décharge (12).

4. Dispositif selon l'une des revendications précédentes, **caractérisé en ce qu'**un dispositif d'aspiration (26) est connecté au premier contenant (1) pour évacuer le gaz.

5. Dispositif selon l'une des revendications précédentes, **caractérisé en ce qu'**un moyen de déchargement (18) avec sa propre étuve et son récipient d'évaporation est connecté à la seconde conduite d'évacuation (16).

6. Dispositif selon l'une des revendications précédentes, **caractérisé en ce que** le premier contenant (1) présente une conduite des gaz d'échappement (25), qui peut être refermée hermétiquement par le biais d'une soupape des gaz d'échappement (24) et un dispositif de dosage, ladite conduite et ledit dispositif de dosage étant connectés au premier contenant (1) par le biais de conduites d'alimentation (23), qui peuvent être refermées hermétiquement à l'aide d'une soupape respectivement.

7. Dispositif selon l'une des revendications précédentes, **caractérisé en ce que** le premier contenant présente un capteur de température (TIS) et un capteur de pression (PIC) et le second contenant (10) présente un capteur de pression (PIC), lesdits contenants étant connectés respectivement à un dispositif de commande, que le dispositif de commande est conçu pour commander la soupape des fumées d'évacuation (20) en fonction des signaux du capteur de température (TIS) du premier contenant (1) et des capteurs de pression (PIC) du premier contenant (1) et du second contenant (10).

8. Dispositif selon l'une des revendications précédentes, **caractérisé en ce qu'**il présente un dispositif de commande qui est conçu pour le remplissage des ingrédients aqueux d'une première masse dans le premier contenant (1), pour l'ouverture de la soupape des fumées d'évacuation (20) pour l'introduction de fumées d'évacuation du second contenant (10) dans le premier contenant (1) et pour le remplissage subséquent des ingrédients hydrosolubles solides de la première masse dans le premier contenant (1), pour la fermeture subséquente des soupapes (12, 20) disposées dans les conduites connectées au premier contenants (1) et pour le chauffage du premier contenant (1) puis l'ouverture et la fermeture subséquente de la seconde soupape d'évacuation (17).

9. Dispositif selon l'une des revendications précédentes, **caractérisé en ce que** la conduite des fumées d'évacuation (19) se compose de plusieurs sections au-dessus de la hauteur de remplissage maximale du premier contenant (1) et que l'embouchure de la conduite des fumées d'évacuation (19) est disposée à l'intérieur du premier contenant au-dessous de la hauteur de remplissage maximale (FH) du premier contenant (1).

10. Procédé de fabrication d'une masse de confiserie comprenant
a) le dosage d'ingrédients aqueux solides dans un premier contenant (1), que l'on peut chauffer et qui présente un agitateur (3) et une première soupape de décharge (12) dans une première conduite de décharge (11) connectée à un second contenant (10), et
b) le chauffage du premier contenant (1) pour atteindre une température cible, **caractérisé en ce que** la température cible est une température supérieure à la température d'ébullition de la première masse à la pression ambiante,
c) l'introduction de fumées d'évacuation d'un second contenant (10) dans le premier contenant (1) par ouverture d'une soupape d'évacuation des fumées (20) d'une conduite des fumées d'évacuation (19), reliant le second contenant (10) au premier contenant (1),
d) le dosage d'ingrédients hydrosolubles solides dans le premier contenant (1),
e) le chauffage du premier contenant (1) avec fermeture hermétique jusqu'à dissolution complète des ingrédients hydrosolubles solides pour obtenir une première masse,
f) l'ouverture de la première soupape de décharge (12) pour introduire la première masse contenue dans le premier contenant (1) dans le second contenant (10),
g) la fermeture de la première soupape de décharge (12) pour sceller hermétiquement le second contenant (10),
h) le soulagement de pression du premier contenant (1) par ouverture d'une soupape des gaz d'échappement (24), disposée au niveau du premier contenant (1).

11. Procédé selon la revendication 10, **caractérisé en ce que** le premier contenant (1) est soumis à un gaz sous pression pendant le transfert de la première masse dans le second contenant (10).

12. Procédé selon l'une des revendications 10 à 11, **caractérisé en ce que** le premier contenant (1) est soumis à un gaz sous pression avant d'atteindre la température d'ébullition de la première masse à la pression ambiante, au moins jusqu'à la pression correspondant à la température cible de la première masse.

13. Procédé selon l'une des revendications 10 à 12, **caractérisé en ce que** le second contenant (10) est pressurisé à l'aide de gaz sous pression avant d'introduire la première masse à partir du premier contenant (1).

14. Procédé selon l'une des revendications 10 à 13, **caractérisé en ce que** du gaz est évacué au moyen d'un dispositif d'aspiration (26) à partir du premier contenant (1) pendant l'introduction de fumées d'évacuation à partir d'un second contenant (10) dans le premier contenant.

15. Procédé selon l'une des revendications 10 à 14, **caractérisé en ce que** le procédé est mis en oeuvre par cycles.

16. Procédé selon l'une des revendications 10 à 14, **caractérisé en ce que** des ingrédients hydrosolubles solides sont dosés à l'étape a) au lieu de l'étape d).
